(19) Europäisches Patentamt
European Patent Office
Office européen des brevets

(11) **EP 3 107 170 B1**

(12) **EUROPEAN PATENT SPECIFICATION**

(45) Date of publication and mention
of the grant of the patent:
**13.09.2017  Bulletin 2017/37**

(51) Int Cl.:
*H02H 3/16* *(2006.01)*          *G01R 31/08* *(2006.01)*
*H02H 7/26* *(2006.01)*          *H02H 3/50* *(2006.01)*

(21) Application number: **16174300.0**

(22) Date of filing: **14.06.2016**

(54) **METHOD AND APPARATUS FOR AUTOMATIC ADAPTATION OF EARTH-FAULT PROTECTION**

VERFAHREN UND VORRICHTUNG ZUR AUTOMATISCHEN ANPASSUNG EINES
ERDKURZSCHLUSSSCHUTZES

PROCÉDÉ ET APPAREIL POUR L'ADAPTATION AUTOMATIQUE D'UNE PROTECTION DE
DÉFAUT À LA TERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2015  FI 20155460**

(43) Date of publication of application:
**21.12.2016  Bulletin 2016/51**

(73) Proprietor: **ABB Schweiz AG
5400 Baden (CH)**

(72) Inventors:
• **Altonen, Janne**
  **33720 Tampere (FI)**
• **Wahlroos, Ari**
  **65320 Vaasa (FI)**

(74) Representative: **Kolster Oy Ab
Salmisaarenaukio 1
00180 Helsinki (FI)**

(56) References cited:
**EP-A1- 2 490 311     EP-A1- 2 639 914
EP-A1- 2 741 389     CA-A- 293 996**

**Description**

FIELD OF THE INVENTION

The present invention relates to automatic adaptation of earth-fault protection to post-fault oscillation phenomenon.

BACKGROUND OF THE INVENTION

One of the special challenges for earth-fault protection in compensated MV-networks is the post-fault oscillation, which is initiated as the fault is removed by tripping or by self-extinguishment of the fault arc. During this transient process the network returns back to the healthy state through oscillations with frequency and time constant defined by network parameters. In case of permanent fault such oscillation is experienced only momentarily, but during intermittent earth fault the oscillation repeats itself between fault pulses. Due to decaying nature and possible off-nominal frequency of the oscillation, false operations of the earth-fault protection may occur. This is especially valid for Petersen coil compensated networks, and especially for networks with only distributed coils (or combi-reactors), where transient overcompensation of the feeder can occur.

BRIEF DESCRIPTION OF THE INVENTION

An object of the present invention is to provide a method and an apparatus for implementing the method so as to overcome the above problem or at least to alleviate the problem. The objects of the invention are achieved by a method, a computer program product and an apparatus which are characterized by what is stated in the independent claims. The preferred embodiments of the invention are disclosed in the dependent claims.

The invention is based on the idea of adapting the earth-fault protection in case post-fault oscillation phenomenon is detected.

An advantage of the invention is that false operations of earth-fault protection can be avoided. In addition, the invention improves the security of protection during restriking earth-faults, where post-fault oscillation repeats itself between fault pulses.

BRIEF DESCRIPTION OF THE DRAWINGS

In the following the invention will be described in greater detail by means of preferred embodiments with reference to the accompanying drawings, in which

Figure 1 is a simplified diagram illustrating an example of an electric network;
Figure 2 is an example of a single-phase RLC-equivalent circuit of a network and feeder during outside fault (SW1 closed) and after fault current interruption (SW1 opened, initiation of the post-fault oscillation);
Figure 3 is an example of an estimate of a post-fault oscillation frequency with a given total inductive and capacitive earth-fault currents of the network;
Figure 4 is an example of a critical post-fault oscillation frequency of a protected feeder, which results in transient overcompensation as a function of IeFd, ICoilFd as a parameter; and

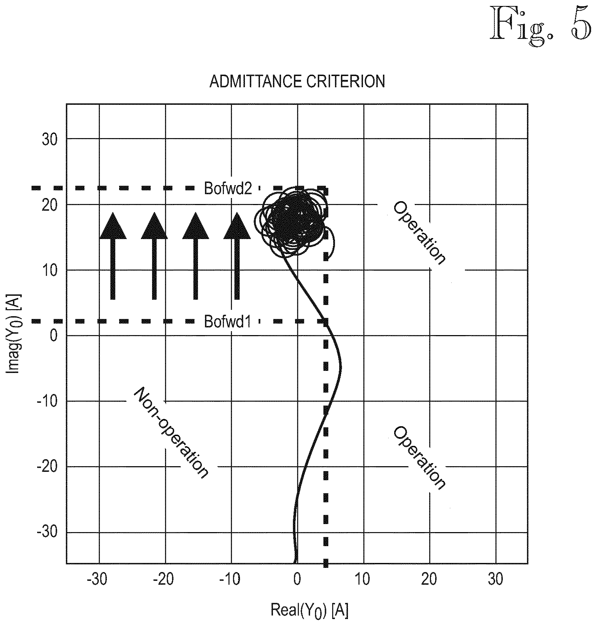

Figure 5 is an example of co-ordination of neutral admittance protection settings considering transient overcompensation due to post-fault oscillation.

DETAILED DESCRIPTION OF THE INVENTION

The application of the invention is not limited to any specific system, but it can be used in connection with various three-phase electric systems. The electric line can be a feeder, for example, and it may be an overhead line or a cable or a combination of both. The electric power system in which the invention is implemented can be an electric transmission or distribution network or a component thereof, for example, and may comprise several feeders or sections. Moreover, the use of the invention is not limited to systems employing 50 Hz or 60 Hz fundamental frequencies or to any specific voltage level.

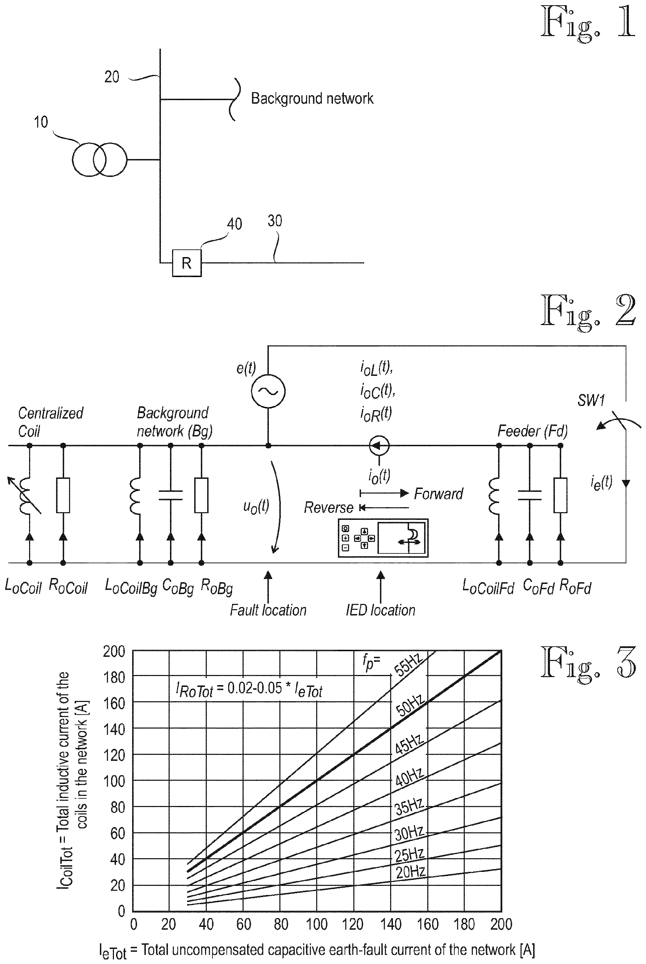

Figure 1 is a simplified diagram illustrating an electric network in which the invention can be applied. The figure only shows components relevant for understanding the invention. The exemplary network can be a medium voltage (e.g. 20 kV) distribution network fed through a substation comprising a transformer 10 and a busbar 20. The illustrated network also comprises electric line outlets, i.e. feeders, of which one 30 is shown separately. Other possible feeders as well as other network parts, except the line 30, are referred to as a 'background network'. The figure also shows a protective relay unit 40 at the beginning of the electric line 30. The protective relay unit 40 may be located inside the substation. It should be noted that there may be any number of feeders or other network elements in the electric network. There may also be several feeding substations. Further, the invention can be utilized with a switching station without a transformer 10, for example. The network is a three-phase network, although, for the sake of clarity, the phases are not shown in the figure. In the exemplary system of Figure 1, the functionality of the invention may be located in the relay unit 40, for example. It is also possible that, for instance, only some measurements are performed at the location of the relay unit 40 and the results are then transmitted to some other unit or units (not shown in the figure) in another location for further processing. In other words, the relay unit 40 could be a mere measuring unit, while the functionality of the invention, or part of it, could be located in some other unit or units.

Current and voltage values that may be needed in the following embodiments may be obtained by a suitable measuring arrangement including e.g. current and voltage transducers (not shown in the figures). In most of the existing protection systems, such values are readily available and thus the implementation of the various embodiments does not necessarily require any additional measuring arrangements. The residual voltage of the electric network may be determined from phase voltages or by measuring it from an open delta winding formed by voltage transformers, for example. The residual current of the electric line 30 may be determined with a suitable current measuring arrangement at a measuring point such as the relay unit 40. How these values are obtained is of no relevance to the basic idea of the invention and depends on the particular electricity system. An earth fault occurring in the electric network may be detected e.g. by the protective relay 40 associated with the electric network and the detection may be based on the value of the residual voltage $U_o$ of the electric network, for example. The particular way how earth faults are detected is, however, of no relevance to the basic idea of the invention.

An exemplary single-phase RLC-equivalent circuit of a compensated MV-network shown in Figure 2 may be used to analyse the post-fault oscillation. The fault resistance and the natural asymmetry of the network may be neglected. It has been assumed that the oscillation is initiated by a temporary transient fault, thus the connection status of the network is not changed due to the fault.

With the switch *SW1* closed a steady state fault outside the feeder can be analysed. When the switch *SW1* is opened at a zero-crossing of the earth-fault current $i_e$, the post-fault oscillation is initiated. Although Figure 2 presents an outside fault, the exemplary equivalent circuit is also valid for a faulty feeder after fault current interruption, or between repetitive restrikes during an intermittent earth fault, for example.

The inductances, capacitances and resistances of the equivalent circuit can be calculated based on the basic network parameters in primary level from the utility Distribution Management Systems (DMS):

$$L_{oCoil} = U_{PE} / (\omega_n \cdot I_{Coil}) , R_{oCoil} = U_{PE} / (I_{Coil} / rx_{Coil} + I_{rCoil}) ,$$

$$L_{oCoilBg} = U_{PE} / (\omega_n \cdot I_{CoilBg}) , C_{oBg} = (I_{eTot} - I_{eFd}) / (\omega_n \cdot U_{PE}) ,$$

$$R_{oBg} = U_{PE} / ((I_{eTot} - I_{eFd}) / rx_{Net} + I_{CoilBg} / rx_{CoilDst}) ,$$

$$L_{oCoilFd} = U_{PE} / (\omega_n \cdot I_{CoilFd}) , C_{oFd} = I_{eFd} / (\omega_n \cdot U_{PE}) ,$$

$$R_{oFd} = U_{PE} / (I_{eFd} / rx_{Net} + I_{CoilFd} / rx_{CoilDst}) ,$$

where

$U_{PE}$ = Operating phase-to-earth voltage, $w_n$ = Nominal angular frequency, $I_{Coil}$ = Current of the central compensation coil, $rx_{Coil}$ = ratio of resistance and reactance of the central compensation coil, $I_{rCoil}$ = Current of the parallel resistor of the central compensation coil, $I_{CoilBg}$ = Total current of the distributed compensation coil(s) located at the parallel feeders (background network), $I_{eTot}$ = Total uncompensated capacitive earth-fault current of the network, $I_{eFd}$ = Uncompensated capacitive earth-fault current of the feeder, $rx_{Net}$ = ratio of resistance and reactance of the feeders, $rx_{CoilDst}$ = ratio of resistance and reactance of the distributed compensation coils, $I_{CoilFd}$ = Total inductive current of the distributed compensation coils located at the protected feeder.

During a steady state phase-to-earth-fault the switch *SW1* is closed, t<0sec. The following time-domain equations for the source and residual voltage are valid:

$$e(t) = \hat{e} \cdot \cos(\omega \cdot t) \ , \ \ u_o(t) = -e(t)$$

Post-fault oscillation is initiated as the fault becomes self-extinguished by opening the switch *SW1* at the zero-crossing of the fault current at *t*=0sec. At this moment of time the phase angle difference between the residual voltage and fault current equals $\varphi_F$. For the residual voltage during the post-fault oscillation it can be written (t≥0sec.):

$$u_o(t) = -\hat{e} \cdot \cos(2\pi \cdot f_P \cdot t - \varphi_P) \cdot e^{-t/\tau_P} \qquad (1)$$

where

$$f_P = f_n \cdot \sqrt{I_{CoilTot}/I_{eTot} - I_{RoTot}^2/(4 \cdot I_{eTot}^2)} \qquad (2)$$

$$\tau_P = 2 \cdot I_{eTot}/(\omega_n \cdot I_{RoTot}) \qquad (3)$$

$$\varphi_P = \varphi_F + \pi/2 \ , \ \ \varphi_F = a\tan\left((I_{eTot} - I_{CoiltTot})/I_{R_{oTot}}\right)$$

With the following notations:

$w_P$ = Angular frequency corresponding to the post-fault oscillation frequency $f_P$, $\varphi_P$ = Phase angle of healthy phase-to-earth voltage at the time of fault current interruption, $\varphi_P$ = Phase angle difference between residual voltage and earth-fault current at the time of fault current interruption, $I_{CoilTot}$= Total inductive current of the coils in the network taking into account the central coil and the distributed coils(= $I_{Coil}+I_{CoilFd}+I_{CoilBg}$), $I_{RoTot}$ = Total resistive leakage loss current of the network = $U_{PE}/(R_{oCoil}\times R_{oFd}\times R_{oBg})/(R_{oCoil}\times R_{oBg} + R_{oCoil}\times R_{oFd} + R_{oFd}\times R_{oBg})$, $\tau_P$ = Time constant of decay of the post-fault oscillation.

According to Figure 2, the residual current is a sum of resistive, capacitive and inductive components. As post-fault oscillation can occur with off-nominal frequency, it is preferable to recall frequency dependence of capacitances and inductances in Figure 2:

$$I_{inductive} [@f_P] = (f_n/f_P)*I_{inductive}$$

$$I_{capacitive} [@f_P] = (f_P/f_n)*I_{capacitive}$$

The inductive current increases if the frequency is below nominal, while the capacitive current decreases.
In the following an exemplary calculation procedure is presented to check if there is a risk of false operation of basic earth-fault protection due to transient overcompensation of the protected feeder caused by post-fault oscillation:

Step 1: Determine the frequency ($f_P$) of the post-fault oscillation and its time constant by using *Eq.* 2 and *Eq.* 3. These values are network specific i.e. determined by the total capacitance and shunt losses of the network. From *Eq.* 2 the total inductive current of the coils in the network can be derived, so that a certain post-fault oscillation frequency is achieved:

$$I_{CoilTot} = (f_P/f_n)^2 \cdot I_{eTot} + 0.25 \cdot I_{RoTot}^2/I_{eTot} \qquad (4)$$

Utilizing Eq. 4, the curves of Figure 3 can be constructed to estimate the post-fault oscillation frequency with the given total inductive and capacitive currents. From Figure 3 it can be concluded that the smaller the total inductive coil current of the network (lower compensation degree of the network) is, the lower the post-fault oscillation frequency becomes.
Step 2: Determine whether the residual current measured at the beginning of the protected feeder is capacitive (undercompensated) or inductive (overcompensated) at the post-fault oscillation frequency $f_P$. This step is feeder specific, i.e. determined by the feeder specific capacitances and shunt losses. The feeder compensation degree can be defined as $K_{Fd}[@f_P] = I_{CoilFd}[@f_P]/I_{eFd}[@f_P]$ and calculated from the following equation:

$$K_{Fd}\left[@f_P\right] = (f_n / f_P)^2 \cdot I_{CoilFd} / I_{eFd} \qquad (5)$$

In case $K_{Fd} \geq 1.0$, the feeder becomes temporarily overcompensated due to the fact the inductive current of the coils at this frequency produce more inductive current than the capacitances produce capacitive current. This means that the total residual current is inductive and flows towards the bus. As a result, the basic protection may operate falsely, if this condition is not taken into account in the settings. From Eq. 5 it is also possible to solve the critical frequency below which the feeder becomes overcompensated:

$$f_{PcrFd} \leq f_n \cdot \sqrt{I_{eFd} \cdot I_{CoilFd}} / I_{eFd} \qquad (6)$$

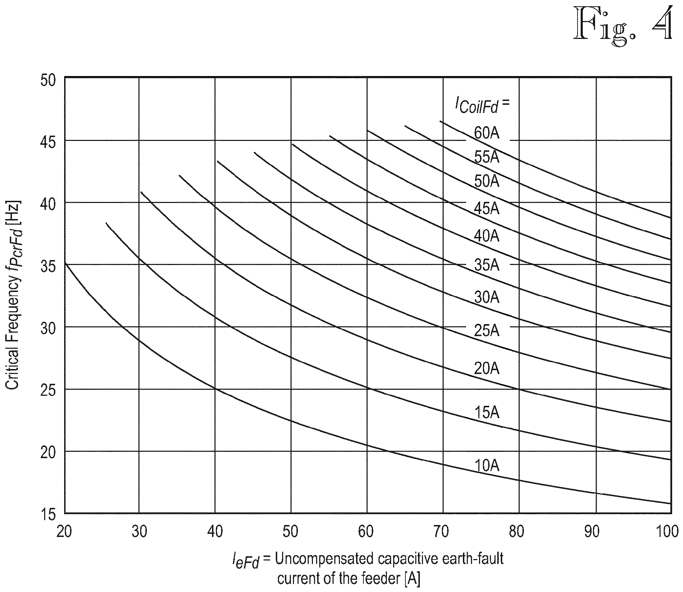

If the post-fault oscillation frequency $f_P$ calculated in Step 1 is lower than the estimated critical frequency for the given feeder, the feeder becomes temporarily overcompensated during the post-fault oscillation. By using Eq. 6 the curves of Figure 4 can be constructed to estimate this critical frequency as a function of the total uncompensated capacitive earth-fault current of the feeder, the total inductive current of the feeder as a parameter. For example, if IeFd=50A and ICoildFd=25, the critical frequency is ~35Hz. If the post fault oscillation frequency is lower than this, the feeder becomes temporarily overcompensated.

If a possible protection problem is identified according to the calculation procedure used, settings and configuration of the protection should be checked. This is especially valid in networks where only distributed compensation coils are used and earth-fault protection is based on the same functionality and settings that are applied in unearthed networks.

An embodiment is based on adaptation of earth-fault protection settings or protection logic automatically based on the measured frequency of the residual voltage. Frequency measurement may be activated when the earth-fault protection becomes activated. In case the measured frequency of the residual voltage ($f_P$) is below a critical frequency, the suggested adaptation becomes active. This critical frequency can be calculated from Equation 7:

$$f_{PcrFd} \leq \left( f_n \cdot \sqrt{I_{eFd} \cdot I_{CoilFd}} / I_{eFd} \right) \cdot q \qquad (\text{Eq. 7})$$

A graphical presentation of Equation 7 can be found from Figure 4.

If the measured post-fault oscillation frequency $f_P$ is lower than the estimated critical frequency, the feeder becomes temporarily overcompensated during the post-fault oscillation. In order to avoid protection maloperation and unnecessary customer outage, adaptation of earth-fault protection settings or protection logic is required and becomes active.

In the following different alternative embodiments for activated adaptation of the earth-fault protection settings or protection logic is presented.

The suggested adaptation may be active for a duration defined by Equation 8:

$$\tau_P = 2 \cdot I_{eTot} / (\omega_n \cdot I_{RoTot}) \qquad (\text{Eq. 8})$$

Alternative 1. Automatic adaptation of admittance based earth-fault protection:

In case the neutral admittance based earth-fault protection is applied, the settings can be automatically coordinated with the post-fault oscillations in the admittance plane.

The measured neutral admittance (after conversion to current: $\underline{I}_o' = \underline{Y}_o * U_{PE}$) during the post-fault oscillation for the healthy feeder can be estimated from Equation 9:

$$\underline{I}_{oP}' = -(I_{RoFd} + j \cdot (f_P / f_n \cdot I_{eFd} - f_n / f_P \cdot I_{CoilFd})) \qquad (\text{Eq. 9})$$

where

$$R_{oFd} = U_{PE} / (I_{eFd} / rx_{Net} + I_{CoilFd} / rx_{CoilDst})$$

$$f_P = f_n \cdot \sqrt{I_{CoilTot} / I_{eTot} - I_{RoTot}^2 / (4 \cdot I_{eTot}^2)}$$

Adaptation of the neutral admittance protection may be done by increasing the susceptance boundary line value from a nominal Bofwd1 to value Bofwd2, which may be determinated from Equation 10:

$$Bofwd2 = (f_n / f_P \cdot I_{CoilFd} - f_P / f_n \cdot I_{eFd}) \cdot q \qquad \text{(Eq. 10)}$$

Alternative 2. Automatic adaptation of the admittance based earth-fault protection:

In case current based directional earth-fault protection is applied, the operate current, voltage and time settings can be co-ordinated according to a duration and amplitude of the post-fault oscillation. The purpose is to select such settings that no false operations occur, and also that the operating speed and sensitivity requirements of the protection are fulfilled. The residual current of the protected feeder during post-fault oscillation as a function of time can be estimated by using Eq. 11 as:

$$I_{oP}(t) = |I_{oP}'| \cdot e^{-t/\tau_P} \qquad (11)$$

If such a coordination is not feasible, e.g. cannot meet the requirement set by legislation, a simple current reversal blocking logic can be used. During a reverse fault the residual current is capacitive and flows towards the bus. This activates a dedicated reverse fault indication logic, which then blocks the actual forward looking protection stage. When the residual current turns temporarily to inductive due to the post-fault oscillation, the reverse fault indication logic would reset, but it may be kept activated by a drop-off time delay. Therefore, the forward looking stage remains blocked for a set time (e.g. at least $T_P$) from the beginning of the post-fault oscillation, which prevents false operations of it. Practical implementation of the logic may require an additional reverse looking stage and a drop-off delay timer to be inserted into the protection configuration.

Thus, according to an embodiment, a possible solution for adapting earth-fault protecting against post-fault oscillation is to use automatic current reversal blocking logic. In this case, when the logic is activated, the operation of the earth-fault protection is blocked temporarily for a time period defined by Equation 8.

An apparatus according to any one of the above embodiments, or a combination thereof, may be implemented as a single unit or as two or more units that are configured to implement the functionality of the various embodiments. Here the term 'unit' refers generally to a physical or logical entity, such as a physical device or a part thereof or a software routine. One or more of these units may reside in the protective relay unit 40 or generally in an IED (Intelligent Electronic Device), for example.

An apparatus according to any one of the embodiments may be implemented by means of a computer or corresponding digital signal processing equipment provided with suitable software, for example. Such a computer or digital signal processing equipment preferably comprises at least a working memory (RAM) providing storage area for arithmetical operations and a central processing unit (CPU), such as a general-purpose digital signal processor. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention further preferably comprises suitable input means for receiving e.g. measurement and/or control data, which input means thus enable e.g. the monitoring of current and voltage quantities, and output means for outputting e.g. fault alarms and/or control data e.g. for controlling protection equipment such as switches, disconnectors and circuit-breakers. It is also possible to use a specific integrated circuit or circuits, and/or discrete components and devices for implementing the functionality according to any one of the embodiments.

The invention can be implemented in existing system elements, such as various protective relays or similar devices, generally IEDs, or by using separate dedicated elements or devices in a centralized or distributed manner. Present protective devices for electric systems, typically comprise processors and memory that can be utilized in the functions according to embodiments of the invention. Thus, all modifications and configurations required for implementing an embodiment of the invention e.g. in existing protective devices may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory means, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

It will be obvious to a person skilled in the art that, as the technology advances, the inventive concept may be implemented in various ways. The invention and its embodiments are not limited to the examples described above but may vary within the scope of the claims.

Notations used herein:

$\underline{I'}_{oP}$ = Measured neutral admittance after conversion to equivalent current $\underline{I}_o{'}=\underline{Y}_o{}^*U_n$,

$I_{RoFd}$ = Total leakage loss current of the protected feeder: sum of losses of the feeder and the connected distributed compensation coils = $U_{PE}/R_{oFd}$.

$f_P$ = Post-fault oscillation frequency

$f_n$ = Nominal system frequency

$I_{eFd}$ = Uncompensated capacitive earth-fault current of the feeder

$I_{CoilFd}$ = Total inductive current of the distributed compensation coils located at the protected feeder

$U_{PE}$ = Operating phase-to-earth voltage,

$rx_{Net}$ = ratio of resistance and reactance of the feeders,

$rx_{CoilDst}$ = ratio of resistance and reactance of the distributed compensation coils,

$I_{eTot}$ = Total uncompensated capacitive earth-fault current of the network

$$I_{RoTot} = \text{Total resistive leakage loss current of the network} =$$
$$U_{PE}/(R_{oCoil} \times R_{oFd} \times R_{oBg})/(R_{oCoil} \times R_{oBg} + R_{oCoil} \times R_{oFd} + R_{oFd} \times R_{oBg})$$

$$R_{oCoil} = U_{PE} / (I_{Coil} / rx_{Coil} + I_{rCoil})$$

$$R_{oBg} = U_{PE} / ((I_{eTot} - I_{eFd}) / rx_{Net} + I_{CoilBg} / rx_{CoilDst})$$

$$R_{oFd} = U_{PE} / (I_{eFd} / rx_{Net} + I_{CoilFd} / rx_{CoilDst})$$

$I_{CoilBg}$ = Total current of the distributed compensation coil(s) located at the parallel feeders (background network),

For practical approximation, $I_{RoTot}$ can be assumed to be

0.02...0.05*$(I_{eTot} + I_{CoilTot})$, cable networks
0.05...0.15*$(I_{eTot} + I_{CoilTot})$, overheadline networks
0.05...0.10*$(I_{eTot} + I_{CoilTot})$, mixed networks

where

$I_{CoilTot}$ = Total inductive current of the coils in the network taking into account the central coil and the distributed coils (= $I_{Coil}+I_{CoilFd}+I_{CoilBg}$),

For practical approximation, $I_{RoFd}$ can be assumed to be

0.02...0.05*$(I_{eFd} + I_{CoilFd})$, cable networks

0.05...0.15*$(I_{eFd} + I_{CoilFd})$, overheadline networks
0.05...0.10*$(I_{eFd} + I_{CoilFd})$, mixed networks

q = protection security margin, preferably 1 to 1.5, typically 1.05 to 1.15 pu

## Claims

1. A method for adaptation of earth-fault protection of an electric network, the method comprising:

   detecting an earth fault in the electric network;
   determining, after detecting the earth fault, the post fault oscillation frequency of a residual voltage of the electric network; and
   in response to the determined frequency of the residual voltage being lower than a predetermined threshold, adapting the earth-fault protection settings of the electric network.

2. A computer program product comprising computer program code, wherein the execution of the program code in a computer causes the computer to carry out the steps of the method according to claim 1.

3. An apparatus for adapting earth-fault protection of an electric network, the apparatus comprising:

   means for detecting an earth fault in the electric network;
   means for determining, after detecting the earth fault, the post fault oscillation frequency of a residual voltage of the electric network; and
   means for adapting, in response to the determined frequency of the residual voltage being lower than a predetermined threshold, the earth-fault protection settings of the electric network.

## Patentansprüche

1. Verfahren zur Anpassung eines Erdkurzschlussschutzes eines elektrischen Netzwerks, wobei das Verfahren aufweist:

   Erkennen eines Erdkurzschlusses in dem elektrischen Netzwerk;
   Bestimmen, nach dem Erfassen des Erdkurzschlusses, der Nachkurzschluss-Oszillationsfrequenz einer Restspannung des elektrischen Netzwerks; und
   in Antwort auf die bestimmte Frequenz der Restspannung, die niedriger als ein vorbestimmter Schwellenwert ist, Anpassen der Erdkurzschlussschutzeinstellungen des elektrischen Netzwerks.

2. Computerprogrammprodukt, das Computerprogrammcode aufweist, wobei die Ausführung des Programmcodes in einem Computer bewirkt, dass der Computer die Schritte des Verfahrens nach Anspruch 1 ausführt.

3. Vorrichtung zur Anpassung eines Erdkurzschlussschutzes eines elektrischen Netzwerks, wobei die Vorrichtung aufweist:

   Mittel zum Erfassen eines Erdkurzschlusses in dem elektrischen Netzwerk;
   Mittel zum Bestimmen, nach dem Erfassen des Erdkurzschlusses, der Nachkurzschluss-Oszillationsfrequenz einer Restspannung des elektrischen Netzwerks; und
   Mittel zum Anpassen der Erdkurzschlussschutzeinstellungen des elektrischen Netzwerks in Antwort auf die bestimmte Frequenz der Restspannung, die niedriger als ein vorbestimmter Schwellenwert ist.

## Revendications

1. Procédé d'adaptation d'une protection de défaut à la terre d'un réseau électrique, le procédé comprenant les étapes consistant à :

   détecter un défaut à la terre dans le réseau électrique ;

déterminer, après détection du défaut à la terre, la fréquence d'oscillation après défaut d'une tension résiduelle du réseau électrique ; et

en réponse à la fréquence déterminée de la tension résiduelle qui est inférieure à un seuil prédéterminé, adapter les réglages de protection de défaut à la terre du réseau électrique.

2. Produit de programmation informatique comprenant un code de programmation informatique, dans lequel l'exécution du code de programmation dans un ordinateur amène l'ordinateur à effectuer les étapes du procédé selon la revendication 1.

3. Appareil d'adaptation d'une protection de défaut à la terre d'un réseau électrique, l'appareil comprenant :

des moyens pour détecter un défaut à la terre dans le réseau électrique ;

des moyens pour déterminer, après détection du défaut à la terre, de la fréquence d'oscillation après défaut d'une tension résiduelle du réseau électrique ; et

des moyens pour adapter, en réponse à la fréquence déterminée de la tension résiduelle qui est inférieure à un seuil prédéterminé, les réglages de protection de défaut à la terre du réseau électrique.

Fig. 1

20 — Background network

10

40  30

R

Fig. 2

Centralized
Coil

Background
network (Bg)

$e(t)$

$i_{oL}(t)$,
$i_{oC}(t)$,
$i_{oR}(t)$

SW1

Feeder (Fd)

$i_o(t)$

Forward

Reverse

$u_0(t)$

$i_e(t)$

$L_{oCoil}$  $R_{oCoil}$   $L_{oCoilBg}$ $C_{oBg}$ $R_{oBg}$

Fault location

IED location

$L_{oCoilFd}$ $C_{oFd}$ $R_{oFd}$

Fig. 3

$I_{RoTot} = 0.02\text{-}0.05 * I_{eTot}$

$f_p=$ 55Hz
50Hz
45Hz
40Hz
35Hz
30Hz
25Hz
20Hz

$I_{CoilTot}$ = Total inductive current of the coils in the network [A]

$I_{eTot}$ = Total uncompensated capacitive earth-fault current of the network [A]

Fig. 4

$I_{eFd}$ = Uncompensated capacitive earth-fault current of the feeder [A]

Fig. 5

ADMITTANCE CRITERION